# EUROPEAN PATENT SPECIFICATION

(11) **EP 4 050 988 B1**
(45) Date of publication and mention of the grant of the patent: **12.06.2024**
(21) Application number: 20817466.4
(22) Date of filing: 21.10.2020
(51) Int. Cl.: A01G 9/04

(54) **ALL SEASONS PLANT SAUCER**
UNTERTASSE FÜR PFLANZEN FÜR ALLE JAHRESZEITEN
SOUCOUPE POUR PLANTES POUR TOUTES SAISON

(30) Priority: 01.11.2019 GB 201915919
(43) Date of publication of application: 07.09.2022
(73) Proprietor: Daniels, Ellen, Plymouth PL1 5DY (GB)
(72) Inventor: Daniels, Ellen, Plymouth PL1 5DY (GB)
(74) Representative: Handsome I.P. Ltd
(86) International application number: PCT/GB2020/000087
(87) International publication number: WO 2021/084214

(56) References cited:
- EP-A1- 0 727 136
- JP-A- 2003 009 669
- US-A1- 2005 086 863

## Description

1.Technical Field. The invention relates to a plant saucer. Saucers are shallow containers that have things placed upon them. A plant saucer has a potted plant or potted plants placed upon it. A plant saucer is made in any shape and size to fit below the plant pot or pots above. More particularly, this invention relates to a plant saucer which combines both a water-retaining surface with a water-draining surface into one plant saucer.

2.Background. Outside potted plants are often placed on saucers to ensure that the roots of the plants stay moist when it rains in the Spring, Summer and Early Autumn or dry season months in equatorial regions. If potted plants remain on the saucers when outside during late Autumn, Winter and early Spring and the rainy season in equatorial regions the potted plant could suffer from too much rainwater and/or frozen roots.

3.Background Art. There are products on the market that attempt to avoid excess water spilling over plant saucers and these have been available to plant growers for years. These products involve fitting hoses and pipes to the plant tray so that excess water drains away to a chosen place, surfaces are not damaged and mosquitoes/midges cannot breed in sitting water.

US patent application US2005/0086863A1 discloses a combination of a plant pot and corresponding saucer having an integral drain apparatus.

Japanese patent application JP20039669 discloses a device that may be used as a vase, basin or plant pot having plugs that may be put in drainage holes.

The aim of the present invention is to overcome the problem when excess water remains in a plant saucer and damages the health of the plant/plants. By combining a water-retaining surface with a water-draining surface a potted plant can remain healthy in all seasons with the use of one plant saucer. When the potted plant or plants need more water the water-retaining surface is put underneath them and when less water is needed the plant saucer is turned over and the water-draining surface is used underneath the potted plant or plants. The invention concerns an all seasons reversible plant saucer for a potted plant or potted plants according to claim 1.

The all seasons reversible plant saucer can be made out of any suitable material and can have any size that would that would adequately fit below one or more potted plants. Additionally, it can be made out of any colour of combination of colours.

The invention will now be described by way of example with reference to the accompanying drawings. In the drawing:
Figure 1 shows the All Seasons Reversible Plant Saucer for a Potted Plant or Potted Plants with the water-retaining surface being used underneath a potted plant or potted plants
   1.Water-retaining surface in use,
   2. Holes or slits not in use, so water will not drain away from the potted plant or potted plants.
Figure 2 show the All Seasons Reversible Plant Saucer for a Potted Plant or Potted Plants with the water-draining surface being used underneath a potted plant or potted plants.
3. Water-draining surface in use and water will drain away from the potted plant and potted plants,
4. Holes or slits in use, so water will drain away from the potted plant or potted plants.

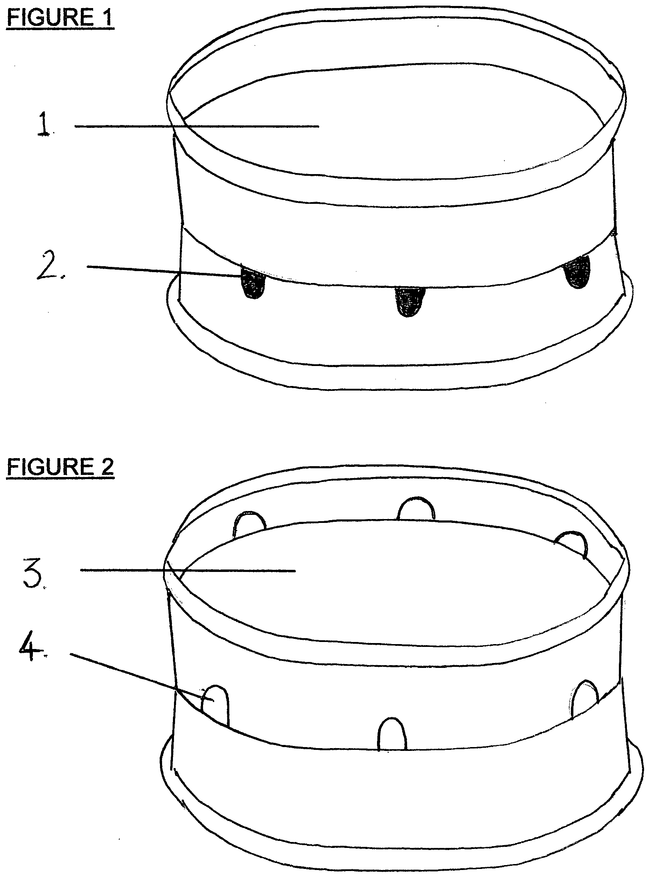

The number of water-draining holes or slits depends on the overall size of the plant saucer and are therefore not restricted to the numbers shown in Figure1 and Figure 2 and the shapes of the plant saucer shown in Figure 1 and Figure 2 do not restrict the variety of shapes that the All Seasons Reversible Plant Saucer for a Potted Plant and Potted Plants is made in.

The All Seasons Reversible Plant Saucer for a Potted Plant and Potted Plants' water-draining surface can be used underneath inside potted plants to avoid over-watering and for plants that dislike having their roots too moist. To avoid water damaging indoor surfaces like table tops and shelves etc the All Seasons Reversible Plant Saucer for a Potted Plant and Potted Plants can be placed inside a larger conventional water-retaining saucer or shallow tray.

## Claims

1. All seasons Reversible Plant Saucer for a Potted Plant or Potted Plants comprising:
- a first surface (1) confiaured to receive at least one plant pot wherein the first surface (1) does not comprise drain holes or slits and is configured to retain water when in use,
- a second surface (2) configured to receive at least one plant pot, wherein the second surface (2) does comprise drain holes or slits and is configured to drain water when in use,
wherein, the first surface (1) and the second surface (2) have the same size and shape, and the number of drainage holes or slits is any amount,
wherein the plant saucer is configured to be turned over , in use, from a first configuration in which the first surface (1) is arranged for reception of at least one plant pot so as to allow water to be retained for the plant or plants to a second configuration in which the second surface (2) is arranged for reception of at least one plant pot so as to allow water to be drained away from the plant or plants, and vice versa.

## Patentansprüche

1. Ganzjährig verwendbarer reversibler Pflanzen-Untersetzer für eine Topfpflanze oder Topfpflanzen, umfassend:
eine erste Oberfläche (1), die eingerichtet ist, wenigstens einen Pflanzentopf aufzunehmen, wobei diese erste Oberfläche (1) keine Ablauflöcher oder -schlitze aufweist und eingerichtet ist, im Gebrauch das Wasser zurückzuhalten,
eine zweite Oberfläche (2), die eingerichtet ist, wenigstens einen Pflanzentopf aufzunehmen, wobei diese zweite Oberfläche (2) Ablauflöcher oder -schlitze aufweist und eingerichtet ist, im Gebrauch das Wasser ablaufen zu lassen, wobei die erste Oberfläche (1) und die zweite Oberfläche (2) die gleiche Größe und Form aufweisen und die Anzahl der Ablauflöcher oder - schlitze irgendeine Zahl ist, wobei der Pflanzen-Untersetzer eingerichtet ist, im Gebrauch umgedreht zu werden, aus einer ersten Konfiguration, in der die erste Oberfläche (1) angeordnet ist für die Aufnahme wenigstens eines Pflanzentopfs, derart, dass dem Wasser ermöglicht wird, für die Pflanzen zurückgehalten zu werden, in eine zweite Konfiguration, in der die zweite Oberfläche (2) eingerichtet ist, wenigstens einen Pflanzentopf aufzunehmen, derart, dass es dem Wasser ermöglicht wird, von der Pflanze oder den Pflanzen abzulaufen und umgekehrt.

## Revendications

1. - Soucoupe pour plante réversible pour toutes saisons, pour une ou plusieurs plantes en pot, comprenant :
- une première surface (1) configurée pour recevoir au moins un pot à plante, la première surface (1) ne comportant pas de fente ou trou de drainage et étant configurée pour, en utilisation, retenir de l'eau,
- une seconde surface (2) configurée pour recevoir au moins un pot à plante, la seconde surface ne comportant pas de fente ou trou de drainage et étant configurée pour, en utilisation, drainer de l'eau,
la première surface (1) et la seconde surface (2) ayant la même taille et la même forme, et le nombre de fentes ou trous de drainage étant quelconque,
la soucoupe pour plante étant configurée pour être retournée, en utilisation, d'une première configuration, dans laquelle la première surface (1) est disposée pour recevoir au moins un pot à plante de façon à permettre à de l'eau d'être retenue pour la ou les plantes, à une seconde configuration dans laquelle la seconde surface (2) est disposée pour recevoir au moins un pot à plante de façon à permettre à de l'eau d'être drainée de la ou des plantes, et inversement.
